# EUROPEAN PATENT APPLICATION

(11) **EP 4 712 431 A1**
(43) Date of publication of application: **18.03.2026**
(21) Application number: 25202663.8
(22) Date of filing: 17.09.2025
(51) Int. Cl.: H04L 45/16, H04L 12/18, H04L 49/201

(54) **MULTICAST CONFIGURATIONS FOR COMMUNICATION NETWORKS**

(30) Priority: 17.09.2024 US 202418887763; 15.10.2024 LU 103412
(71) Applicant: Mellanox Technologies, Ltd., 2069200 Yokneam (IL)
(72) Inventor: OLTCHIK, Yishai, 2069200 Yokneam (IL); BLOCH, Gil, 2069200 Yokneam (IL); LEVY LESHEM, Roee, 2069200 Yokneam (IL); SEGALOVICH, Daniel, 2069200 Yokneam (IL); CASPI, Hanan, 2069200 Yokneam (IL)
(74) Representative: Mathys & Squire

(57) **Abstract**

Systems and methods herein are for multicast configurations in a network using a switch that can receive communication for a multicast group and that can transmit at least data from the communication to different destination nodes. The communication may include, in addition to the data, a multicast identifier associated with first egress ports of the switch and a bitmask representation associated with second egress ports of the switch. The transmission of the data can occur through the first egress ports and the second egress ports to reach the different destination nodes.

## Description

### TECHNICAL FIELD

At least one embodiment pertains to preparing multicast configurations within a network.

### BACKGROUND

A network switch in a multicast configuration may have local data that may have to be replicated for multiple destination endpoints as part of a multicast configuration in a network. For instance, a host node may cause a multicast group in a network that must be configured by a subnet manager (SM) or other manager entity. This may be a slow process and may involve a certain amount of unique multicast local identifiers (MLIDs) to be used in the network. However, these MLIDs may be a limited resource. Further, an identity of destination endpoints and a total number of endpoints for a multicast configuration may be data-dependent. For example, such numbers may not be known ahead of time. Each workload, which may be required to be performed in the multicast group, may likely involve different destination nodes or endpoints, while most multicast routing configuration in network switches may be slow to accommodate all such multicast routing. This may be particularly the case when a communication pattern is data-dependent and unpredictable, and when a communication pattern for a workload is subject to large network topologies.

### SUMMARY

The invention is defined by the claims. In order to illustrate the invention, aspects and embodiments which may or may not fall within the scope of the claims are described herein.

Systems and methods herein are for multicast configurations in a network using a switch that can receive communication for a multicast group and that can transmit at least data from the communication to different destination nodes. The communication may include, in addition to the data, a multicast identifier associated with first egress ports of the switch and a bitmask representation associated with second egress ports of the switch. The transmission of the data can occur through the first egress ports and the second egress ports to reach the different destination nodes. The communication may be a protocol data unit, such as a packet or datagram.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a network that is subject to embodiments of preparing multicast configurations within a network;
FIG. 2 illustrates further aspects of multicast configurations using a bitmask representation, according to at least one embodiment;
FIG. 3A illustrates packet aspects of multicast configurations using a bitmask representation, according to at least one embodiment;
FIG. 3B illustrates switch aspects of multicast configurations using a bitmask representation, according to at least one embodiment;
FIG. 4 illustrates computer and processor aspects of a system for multicast configurations using a bitmask representation, according to at least one embodiment;
FIG. 5 illustrates a process flow in a system for multicast configurations using a bitmask representation, according to at least one embodiment;
FIG. 6 illustrates yet another process flow in a system for multicast configurations using a bitmask representation, according to at least one embodiment; and
FIG. 7 illustrates a further process flow in a system for multicast configurations using a bitmask representation, according to at least one embodiment.

### DETAILED DESCRIPTION

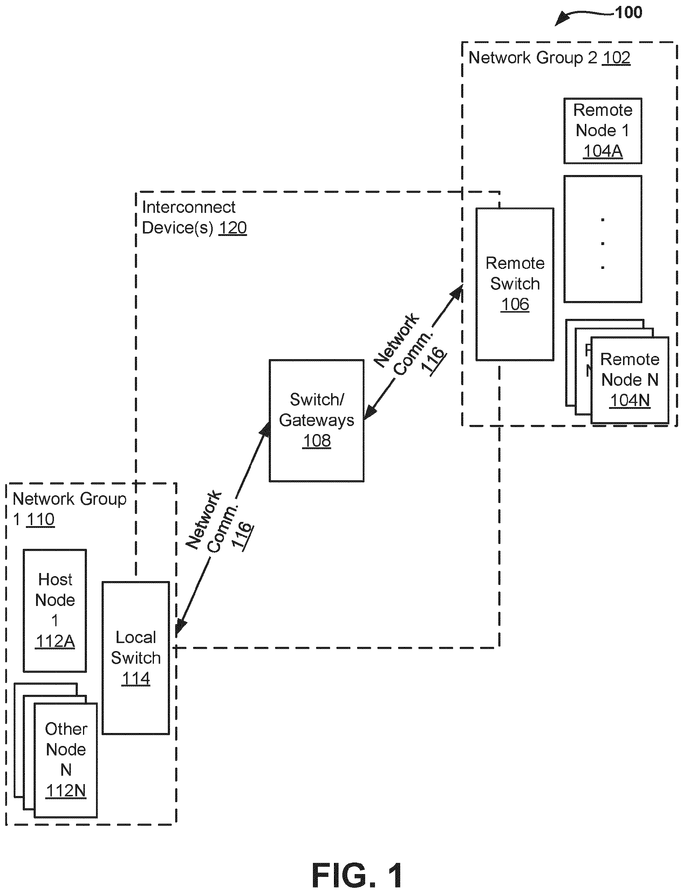

FIG. 1 illustrates a network 100 that is subject to embodiments of preparing multicast configurations, as detailed herein. The network 100 may support multicast configurations that follow a hybrid-multicast operation. For instance, the network 100 may include switches 114, 106 that are capable of static multicast routing that may be restrictive to certain subscribed remote nodes 1-N 104A-104N for multicast communications. However, the network 100 can be subject to dynamic multicast routing, in addition to the static multicast routing, based at least in part on pre-generated possible routings of at least a local switch for multicast communications. The pre-generated possible routings may use a bitmask representation provided from a source host node 1 112A, for instance, to select available egress ports of a local switch 114 to forward a multicast communication independent or separately from the static multicast routing. Therefore, it is also possible to enhance a static multicast routing in real-time using the dynamic multicast routing in the network 100 herein, which that augment capabilities provided, at least in part, in at least one local switch 114.

In one example, a system of at least one local switch 114 and at least one host node 1 112A may be able to communicate a packet format that is associated with the dynamic multicast routing, as part of a communication, for a hybrid-multicast operation herein. The packet format may include at least two fields. A first field may provide a multicast address, such as a multicast local identifier (MLID) of a multicast group as part of the static multicast routing, while a second field may provide a bitmask or a bitmask representation as part of the dynamic multicast routing. The bitmask representation may be of equal length to the number of ports in at least the local switch 114. While the MLID may be used to perform part of a multicast operation, the bitmask representation may be used to augment the multicast operation by instructing the local switch 114 to also replicate at least data in the packet or the communication itself to other local ports of the local switch 114, relative to local ports corresponding to the MLID. This represents, in part, the hybrid-multicast operation of the static and the dynamic multicast routings, where the bitmask representation can permit more endpoints, such as more other or remote host nodes N 112N, N 104N, to share a local switch 114 in multicast operations, without requirements to modify a multicast group associated with the MLID. Further, a multicast identifier is used interchangeably with the NILID to refer to any suitable identifier that may be used to uniquely identify a multicast group.

Therefore, the use of bitmask representations herein may be associated with egress ports of a switch to route data or other communication for a multicast configuration, which may be other than a multicast group of the MLID, in a network 100. A number of nodes which may be host nodes 1-N 112A-112N and remote nodes 1-N 104A-104N may participate in a multicast configuration of a multicast group by joining such a multicast group. A host node herein may be in reference to a node that may be local or logically closer to a local switch 114, relative to a remote node 1-N 104A-104N. Further, a source host node 1 112A as used herein may be part of the host nodes and may be a source of a communication 116 that may be a multicast communication for a multicast group. On the other hand, a remote node 1-N 104A-104N may be associated with a different and remote switch 106 than the local switch 114 and may be logically (such as, by hops) farther away from at least the local switch 114. In one example, a remote node 1-N 104A-104N may be associated with the local switch 114 through one more other switch and/or gateways 108 of one or more interconnect devices 120.

A multicast group may have an associated MLID, as part of at least the static multicast routing. One host node 1 112A of the host nodes 1-N 112A-112N may seek to communicate, through a multicast group, with destination hosts that may be one of the other nodes N 112N and/or one of the remote nodes 1-N 104A-104N. The host node 1 112A may do so using a local switch 114. The host node 1 112A may provide its communication that may include an MLID for the static multicast routing and a bitmask representation for the dynamic multicast routing. At least the bitmask representation may be recognized by the local switch 114 as intended for selecting available and additional egress ports in the local switch 114 that are additional with respect to those egress ports associated with the MLID as established in the local switch 114. All such egress ports may be used or may correspond to the multicast group of different multicast groups that may be registered or associated with the local switch 114 for multicast communication.

In one example, a source host node 1 112A may provide the additional egress ports for each multicast group associated with the source host node by the provision of the bitmask representation itself. A local switch 114 retains a table for the different multicast groups and uses a mapping that is based, at least in part, on different multicast identifiers associated with the different multicast groups, in addition to different sets of bitmask representations from different source nodes, to forward communications through different egress ports of the switch which include the first egress ports and the second egress ports. The reference to mapping herein may be a reference to at least a configuration that may be recognized or applied in at least the local switch 114 for the multicast identifiers and multicast groups. This may be different than the local switch 114 recognizing the bitmask representation, independently or separately from the MLIDs, for selection of all or some available egress ports to forward data from a communication associated with a multicast group.

For instance, the egress ports of a local switch 114 may be mapped to different destination nodes (of the other nodes N 112N and remote nodes 1-N 112A-112N) that may be part of a multicast group or that may be intended for the multicast group. In a further example, the local switch 114 may be associated with a subnet manager (SM) in the case of InfiniBand^{®} (IB), a centralized manager (CM) in NVlink^{®}, or other manager entities of other applicable protocols. In any such implementation, at least some or all available egress ports of a local switch 114 may be mapped for use with the MLIDs but can be used as egress ports under the bitmask representations if they are available. Therefore, the egress ports under the bitmask representations may be in addition to those egress ports of the local switch 114 that are mapped for use under the MLID, to forward data for destination nodes of a multicast group, without further intervention from a manager entity.

A source host node 1 112A may be aware of at least part of the mapping, such as between MLIDs and some egress ports or of all egress ports, by discovering or receiving such information from the switch or from the SM by out of band (OOB) messaging. The local switch 114 itself may be implemented as an SM, in at least one instance. In one example, all egress ports specified by the MLID of a multicast group will receive and forward data of a communication to certain destination nodes, but the bitmask representation provided by a source host node 1 112A that is aware additional egress ports available in the local switch 114 can enable the additional egress ports to also receive and forward the data to additional destination nodes. Further, the bitmask representation herein may add more egress ports without removing egress ports of a multicast group. While these capabilities, to recognize and apply configuration of a bitmask representation, may be the case for a local switch 114, legacy switches, such as a remote switch 106, may be within the network 100 and may continue to receive and forward data without need to understand the bitmask representation. For instance, a legacy switch need not be aware of the bitmask representation as its existing paths or routes for communications from a local switch and on to remote nodes may be already established or may be based at least in part on the egress port selected, in part, from or using the local switch.

The hybrid-multicast operation herein can use the bitmask representation for egress ports in at least a local switch 114, in addition to the MLID of the multicast configurations, to accelerate data-dependent traffic patterns, in one example. A further benefit realized may be an ability to perform more efficient multicast routing without having to greatly increase an amount of MLIDs used in a network 100 or without having to reconfigure an MLID during an application's critical operation. Reconfiguration of an MLID may slow an application's performance in a substantial manner. The slowness for multicast operations may be at least because each endpoint that participates in the hybrid-multicast operation may need some local data to be replicated to multiple destination endpoints or nodes. For instance, in a realistic network, because a topology may be large and have many endpoints, it may be a challenge to define all possible multicast configurations. As such, the hybrid-multicast operation herein can address multicast configurations for routing of data through switches that may otherwise be slow in data-dependent communication patterns, which may be also unpredictable.

In one example, the network 100 may include at least one circuit that may be an execution unit of a processor that may be within a switch 106; 114, any one of different interconnect devices 120, or first or second group nodes 1-N 104A-N; 1-N 112A-N. Therefore, it is possible to implement the bitmask representations herein in any such devices having an execution unit of a processor and configured for recognizing and applying the configuration from a bitmask representation. An interconnect device 120 may allow communication across a wider network group 1 110, 2 102, and may include different switches and/or gateways 108, whereas communications in a narrower network group or within a network group 1 110; 2 102 may be enabled by at least one switch 106; 114. Further, the switches may communicate with each other independent of the nodes to share configuration information for various routes in the network 100.

The switch 106; 114 may be associated with a respective one rack, chassis, or other form of a physical collection illustrated as a network group 1 110; 2 102 of nodes or other endpoints 1-N 104A-N; 1-N 112A-N. Further, the network 100 may include at least a switch or gateway 108, as part of one or more interconnect devices 120, to provide communications 116 between multiple switches 106, 114 and, therefore, between the first or second group nodes 1-N 104A-N, 1-N 112A-N across a wider network group. However, the approaches for multicast configurations using a bitmask representation may be performed within a network group or between network groups using at least one local switch. The descriptions herein to an interconnect device 120 may be understood as applicable using any of the switches 106, 114 or gateways 108 illustrated.

In one example, the communications 116 may be Ethernet, IB, NVLink, Bluetooth^{®}, or any suitable communications that can benefit from the multicast configurations using a bitmask representation described herein. Further, any communications network, including Transmission Control Protocol (TCP) or Internet Protocol (IP) on top of TCP, may be used with the multicast configurations using a bitmask representation described herein. When the communications 116 is IB or NVLink, at least one of the multiple switches 106, 114 or at least one of the first or the second group nodes 1-N 104A-N; 1-N 112A-N may be able to host an SM, a CM, or any required feature for the relevant IB or NVLink protocols. Similarly, when the communications 116 are Ethernet communications, then least one of the multiple switches 106, 114 may be able to host or function as a Switch Manager (SwM).

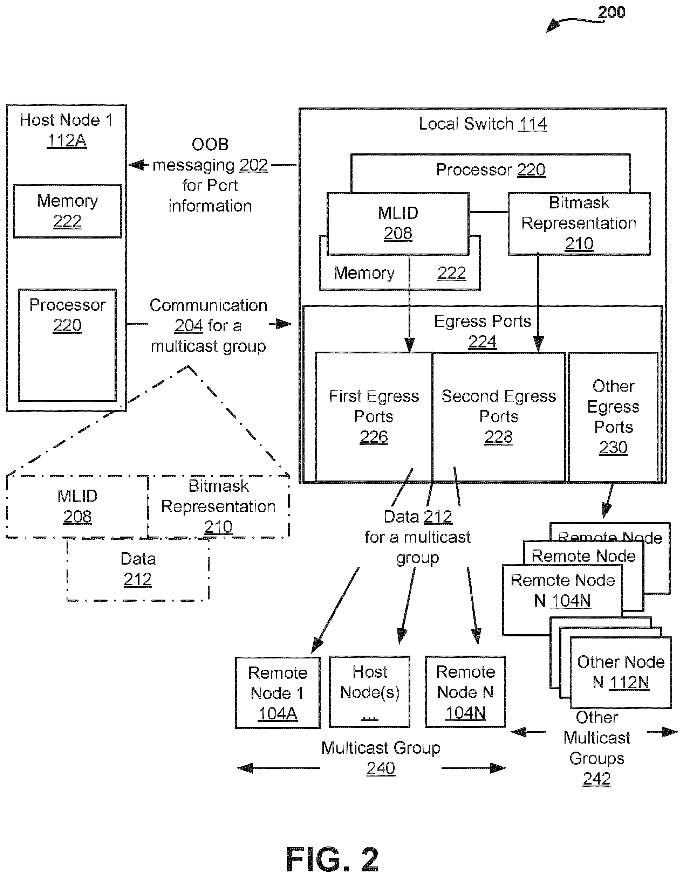

FIG. 2 illustrates further aspects 200 of multicast configurations using a bitmask representation, according to at least one embodiment. The further aspects 200 may include a system for multicast configuration in a network 100 having at least a source host node 1 112A and a local switch 114. The system may also include at least other host node N 112N or remote nodes 1-N 104A-104N. The system of at least the source host node 1 112A and the local switch 114 may be supported by a respective memory 222 and a respective processor 220 that are capable of performing respective instructions to allow the source host node 1 112A to perform workloads and to allow the local switch 114 to perform communications between the source host node 1 112A and other host or remote nodes N 112N, 1-N 104A-104N. However, the system herein may also include at least one other node that may be a host node or a remote node that is part of a multicast group to receive data from the source host node 1 112A using at least the bitmask representation herein.

The local switch 114 can receive communication 204 for a multicast group 240; 242. The communication 204 may be from a source host node 1 112A and may be for at least one other host node N 112N and/or remote nodes 1-N 104A-104N. Therefore, nodes within a network group 1 associated with the source host node 1 112A may also be part of the multicast group 240. The local switch 114 is configured to transmit at least data 212 from the communication 204 to the destination hosts 1-N 104A-104N that are part of the multicast group 240. In one example, at least some of the destination hosts N 112N and/or 1-N 104A-104N are subscribed or associated together to form a multicast group 240; 242. Such association may be at least available to the local switch 114 or may be part of different switches in a route from a local switch 114.

The communication 204 may include, in addition to the data 212, an MLID 208 (or other multicast identifier) associated with first egress ports 226 in the local switch 114 and a bitmask representation 210 associated with second egress ports 228 in the local switch. Then, the local switch 114, based at least in part on the MLID 208 and the bitmask representation 210, is informed to route the data 212 to the multicast group 240 using the first egress ports 226 and the second egress ports 228. In one example, the switch 114 may have therein instructions that, when executed by its processor 220, enables a configuration to apply a mapping for the transmission of the data 212 to occur through the first egress ports 226 and uses the bitmask representations for the transmission of the data 212 to occur through the second egress ports 228 to reach destination hosts. Therefore, at least the local switch 114 is configured to enable recognition and application of the bitmask representation 210 as pertaining to addresses of second egress ports 228 that may be any or some available egress ports of the local switch 114.

Further, the local switch 114 may have associations with other switches, host nodes, or remote nodes for its egress ports 224, and may use such associations to forward the data 212 along established and arbitrary routes. For instance, the established routes may be in connection with at least the first egress ports 226 in support of the MLID 208, whereas the arbitrary routes may be in connection with at least the second egress ports 228 in support of the bitmask representation 210. Therefore, at least the established routes of a local switch may be predetermined routes associated with MLIDs in a routing or other table provided in each of the switches and/or gateway of a network 100, while the arbitrary routes may be partly predetermined routes (at least based on available egress ports of the local switch 114). There may be different multicast groups 240, 242 that may be associated with different sets of bitmask representations that can be provided from different source host nodes. These different sets of bitmask representations may be for different sets of egress ports 226-230 and, consequently, may be associated with different destination nodes N 112N, 1-N 104A-104N that are part of the different multicast groups 240, 242.

The system herein may be such that the local switch 114 may be responsible for the transmission of the data 212, in a network 100, for the appropriate multicast group 240; 242. The local switch 114 may communicate with at least one remote switch 106 that may be associated with one of the destination nodes 1-N 104A-104N. In addition, the local switch 114 may be logically closer to a source host node 1 112A of the communication 204, relative to the destination nodes 1-N 104A-104N. However, it is also possible that at least one destination node N 112N is within a network group that includes the local switch 114. Further, in at least one embodiment, a source host node 1 112A and other nodes N112N, 1-N 104A-104N herein, may be made aware of at least egress ports 224 available and other egress ports 230 that are not engaged in communication, in a switch, by discovering or receiving such information from the switch or from an SM by OOB messaging 202.

In one example, the SM, CM, or other manager entity in a network 100 may be used to enable awareness of all ports associated with switches within a subnet. The subnet herein may be in reference to a network group 1 110; 2 102. For instance, the awareness may include which ports of the local switch 114 couple to which other switches or to which endpoints or nodes in the subnet. The manager entity is able to share such information within endpoints or nodes 1-N 112A-112N, 1-N 104A-104N in the network 100 and the endpoints or nodes 1-N 112A-112N, 1-N 104A-104N are able to prepare their packets to take advantage of such information for multicast communications using the bitmask representation herein. Therefore, there may be one or more entities with different levels of awareness as to egress ports within a fabric of the network 100 and all or at least relevant information for egress ports of a local switch 114 may be shared to connected nodes in its individual subnet to enable those connected nodes to initiate their own multicast communication using the bitmask representation in addition to an MLID for a multicast group, without a need to update the multicast group itself.

In at least one embodiment, the nodes 1-N 104A-112N herein and that are associated together in a network 100 may have an initialization step with one or more switches 106, 114 to be informed ahead of time as to certain information about the network 100. The initialization step may occur as nodes and switches enter (or are added or removed) from the network 100. While described with respect to the network 100, it is apparent that the information herein may be localized to subnets and their nodes or local switches but that at least one of the local switches has information to associate with a remote switch or gateways. The information may include a number of egress ports of at least one local switch 114; 106 that may be different for different ones of the nodes 1-N 112A-112N; 1-N 104A-104N.

In one example, the network groups 1 110, 2 102 may be subnets (or subnetworks) and an SM, CM, or other manager entity may communicate such information to the respective nodes in the network 100. This information may be relied upon by each source host node to initiate a multicast communication. For instance, this information may be used to configure the bitmask representation from a source host node in order to reach intended nodes in the network 100. The information may be provided in the OOB messaging 202 or part of an initialization step for each node or switch joining a network 100. These aspects may be performed, in part, in software, for the host node, and may be supported in firmware or software of a switch.

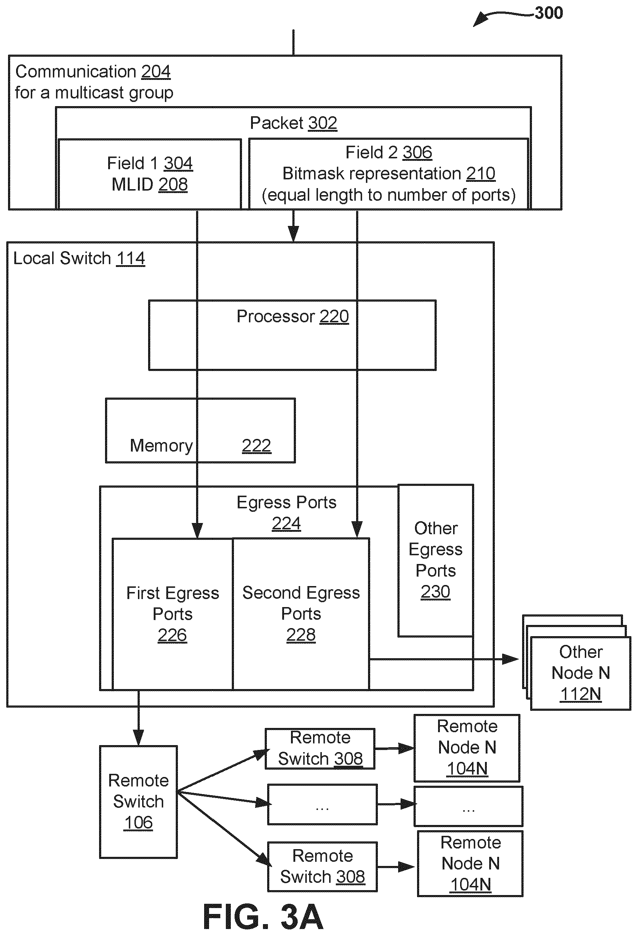

FIG. 3A illustrates packet aspects 300 of multicast configurations using a bitmask representation, according to at least one embodiment. The packet aspects 300 illustrates that a packet 302 received to a local switch 114 may include a first field 304 for the MLID 208 or other multicast address and second field 306 for the bitmask representation 210. The first field 304 and the second field 306 may be header fields that are distinct from the data 212 part of the packet 302. In one example, the source host node 1 112A may have indicated certain ones of the host node N 112N or remote nodes 1-N 104A-104N to receive a multicast communication 204 of provided data 212. The indication may be through one or more of the MLID 208 or the bitmask representation 210. While the data 212 may be part of the packet 302 illustrated, there may be further packets associated with the same multicast communication 204 providing further data that may be provided to the same destination nodes as the data 212 of the packet 302 illustrated using the same MLID 208 and/or bitmask representation 210. When the local switch 114 receives the packet 302, the local switch 114 may be configured to read the fields 304, 306 and to apply configurations therein using the MLID 208 and/or bitmask representation 210.

In one example, the local switch 114 reads the MLID 208 from the first field 304 which informs the local switch 114 to forward the packet 302 with at least the data 212 to a remote switch 106 that may be a distinct switch, from the local switch, along a route to a destination one of the remote nodes 1-N 104A-104N. The local switch 114 may be configured to pass along the packet 302 with at least the data 212 to first egress ports 226 of the local switch 114, where the first egress ports 226 may be associated with at least one remote switch 106. There may be additional switches 308 in this route that may altogether be part of a multicast tree. However, in addition to the MLID 208, the local switch 114 may be configured to also read the second field 306 having the bitmask representation 210. The local switch 114 may be further configured to pass along the packet 302 with at least the data 212 to further nodes N 112N that may be along different routes, with respect to at least those nodes associated with the first egress ports 226 and the MLID 208. For instance, the local switch 114 may be configured to pass along the packet 302 to at least second egress ports 228 that may correspond to the further nodes N 112N that may be along different routes.

When the packet 302 is forwarded to at least one remote or further switch 106; 308, the local switch 114 may maintain the MLID 208 in the packet, but may be configured to remove or blank out the second field 306. This is at least because the remote or further switch 106; 308 may perform its packet processing or forwarding based at least in part on its own routing table of remote nodes N 112N and/or of additional switches 308. Therefore, it is possible that the additional switches 308 are legacy switches without the configuration of the local switch 114 to recognize and process the bitmask representation 210. The bitmask representation 210 may be provided only for the local switch 114 where the bitmask representation may be part of a communication session, and, once the packet is forwarded from the local switch 114, the data 212 can reach all of the additional switches 308 and any further nodes 1-N 104A-104N that may be associated therewith.

Further, in at least one embodiment, the second field 306 may remain in the packet 302 as it is forwarded to a legacy switch but may be ignored if the legacy switch is not configured to recognize the bitmask representation 210. In a further packet aspect, the bitmask representation may be sized to be equal to a number of available ones of the other egress ports 230 in the local switch 114. For instance, the bitmask representation may be 16 bits corresponding to 16 egress available or selected ports of 512 egress ports physically within a switch. When a portion of the egress ports are occupied or engaged in other or related communication, the bitmask representation may only select unoccupied or unengaged egress ports; although it is possible to select all such egress ports irrespective of being occupied or engaged. In one example, the data 212 may be buffered why waiting for an occupied or engaged egress port to become available. When there are more than 512 egress ports in a switch and if at least 512 of the egress ports are to be used for further multicast communication, then the bitmask representation 210 may also have 512 bits in addition to the MLID 208. Therefore, the system herein may be such that the bitmask representation 210 for the second egress ports 228 may include a number of bits which is equal in length to an amount of the second egress ports 228.

In at least one embodiment, the bitmask representation 210 and the MLID 208 may have orthogonal properties. For instance, as used herein, the orthogonal property between the bitmask representation 210 and the MLID 208 may be in reference to a same bitmask representation 210 that may be used with any MLID 208 for a local switch 114. This is at least because the local switch 114 is configured to recognize the bitmask representation 210 distinctly from the MLID 208 provided in a first field 304. Therefore, it is possible to extend the number of destination nodes for an MLID 208 to more than those egress ports specifically associated with the MLID 208 without changing the association of nodes to the NILID 208 itself. As such, the use of the bitmask representations herein avoid a need for changing a configuration of the MLID 208 to add further destination nodes as part of a multicast group.

For its part, each local switch 114 having been configured for recognizing and using a bitmask representation may include a mapping or other manner in which the local switch 114 is always aware or always following changes in routes or association to further switches or to nodes associated therewith. As such, all that may be needed for such a local switch 114 to be configured for multicasting is for each source host node to send their bitmask representation for the local switch 114, which can recognize which egress ports to use, outside of a mapping with existing MLIDs, to ensure that corresponding destination nodes are reached as part of the multicasting.

The local switch 114 can also keep the host nodes in its subnet informed of changes in routes, egress ports, and other information associated with the local switch 114 and at least part of the network 100. All such information may be provided via OOB messaging 202. In at least one example, a node may receive or discover information about egress ports by sending a bitmask representation multiple times, which each time has a difference of at least one bit and, based at least in part on returned information or confirmation of a multicast communication being completed or failed, a node may be able to retain the same or a generate a different bitmask representation for one or more multicast groups.

In at least one embodiment, when a source host node wants to provide a multicast communication 204 for a given multicast group of nodes, then then source host node may configure a bitmask representation using a specific sequence of bits that incorporate certain egress ports of the local switch 114, based on information of the egress ports received via the OOB messaging 202. Therefore, different multicast groups may be referenced by different bits in different bitmask representations without a need to reconfigure the MLID for the local switch 114. In a further example, for a local switch having 256 egress ports, the bitmask representation may be an array of 256 bits. On a local switch, each bit may be physically mapped to a physically transmitting queue of an egress port of the local switch. Still further, while there may be port aggregation or virtual representations of multiple egress ports as a single egress port, all such approaches may require reconfiguration thereof in the local switch 114, unless the ease of the bitmask representation described herein can be applied.

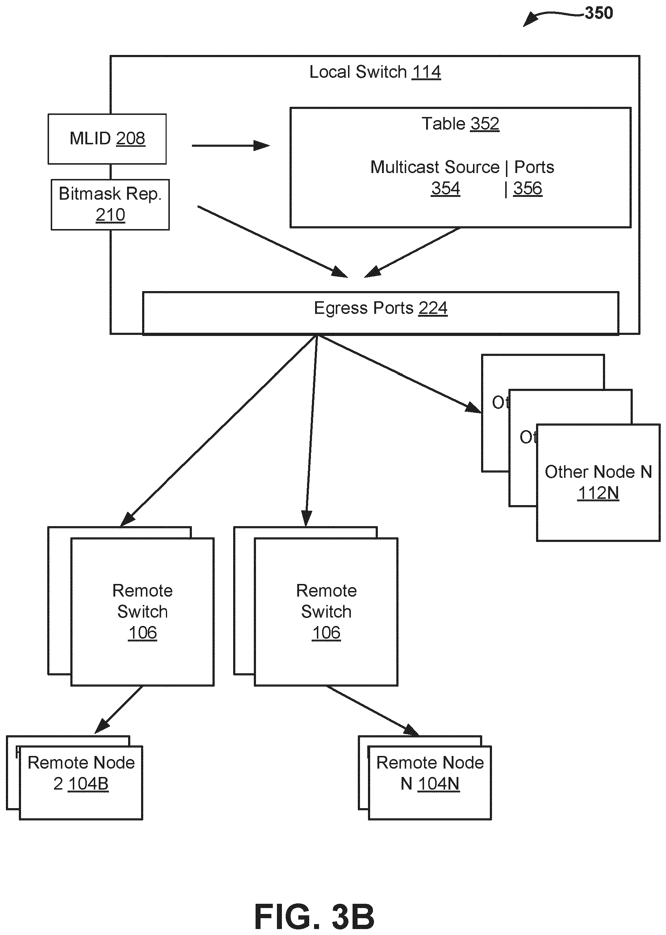

FIG. 3B illustrates switch aspects 350 of multicast configurations using a bitmask representation, according to at least one embodiment. The switch aspects 350 illustrate that each switch in a network 100 may be a local switch to its own subnet and may retain therein a table 352 for associated multicast groups that are registered for each source host node. While illustrated and described as a table 352, the table herein may be in reference to a registry or other manner that relates or to relate together information from one or more of a multicast source 354, and at least one egress port 356.

In one example, the multicast source 354 may be information to identify a source host node and may be represented in a bitmask format that is different from the bitmask representation for egress ports. For instance, the bitmask format for the multicast source 354 may be referenced by the MLID 208 associated therewith. In another example, the bitmask format for the multicast source 354 may be associated with a source internet protocol (IP) or media access control (MAC) address from a packet 302 of the communication 204. As the packet 302 is from a source host node that likely initiated the multicast group and is part of the MLID, the bitmask format for the multicast source 354 may be the MLID or may be associated therewith using the IP or MAC address from the packet 302. The bitmask format for the multicast source 345 may also include bits corresponding to a size of a multicast group. A local switch 114 can use a multicast source 354 to filter multicast communication and to allow packets 302 only matching the multicast source 354 to pass therethrough to apply any configuration for the bitmask representation, for instance. Differently than the MLID 208, the bitmask representation 210 may be only temporarily buffered to enable the arbitrary routes through the second egress ports 228. The bitmask representation 210 may not be retained in the memory 222 (such as via the table 352) of the local switch 114, unlike the MLID 208 that provides the established routes through the first egress ports 226.

A switch may use a next hop to route a packet. A next hop may be also represented in a bitmask format that is distinct from the bitmask representation and that may be based in part on a destination IP addresses of a packet of the communication 204 or the MLID 208 associated with the communication 204. The bitmask format for the next hop may represent a switch-to-switch addressing for a network topology till the destination IP address is reached. A switch can use the bitmask format of the next hop to filter and pass at least one packet 302 that matches the bitmask format of the next hop. For instance, based at least in part on the next hop, a switch can cause the at least one packet 302 to reach another switch that may be associated with the destination IP address. Consequently, the switches can ensure that the packet 302 reaches a destination IP address of a remote node 1-N 104A-104N that may be a destination that is part of a corresponding multicast group 240, 242.

The ports 356 referenced in the table 352 may be with respect to at least the first egress ports 226 of a local switch 114, and which may be intended for at least one packet 302. The ports 356 may be modified or applied in the switch using at least the bitmask representation 210 for the egress ports intended, as part of a multicast group, from the packet 302. Therefore, the bitmask representation 210 for the ports 356 may be based at least in part on the multicast group 240; 242 intended for the packet 302 of the communication 204. A local switch 114 can use the bitmask representation to filter and pass at least one packet 302 matching the bitmask representation to an intended one of different egress ports associated therewith. As such, it is possible to use the bitmask representation 210 to associate a packet 302 or data 212 therein to physical or logical ports from the local switch 114 to another switch (such as, a remote switch 106) or to an endpoint, such as a remote or other node N 112N, 1-N 104A-104N of a corresponding multicast group 240, 242.

Therefore, the table 352 may be used to support first egress ports from a mapping based, at least in part, on different multicast identifiers associated with the different multicast groups. This may be distinct from the bitmask representations for the second egress ports recognized by the local switch 114. The mapping may be in the form of a configuration enabled within at least the local switch 114 to recognize and to apply multicast identifiers 208 for transmission of data 212, with a separate configuration enabled to recognize and apply the bitmask representation 210 independently from the MLIDs for selection of all available egress ports to forward data 212 from the communication 204 to a multicast group 240; 242. The local switch 114 may retain and update the table 352 for different multicast groups. and may additionally use different sets of bitmask representations from different source hosts to forward communications through different egress ports 224 in the local switch 114. Although illustrated as a single table, there may be multiple tables or other manners of association therebetween to enable different multicast identifiers from different source hosts to forward communications to different multicast groups.

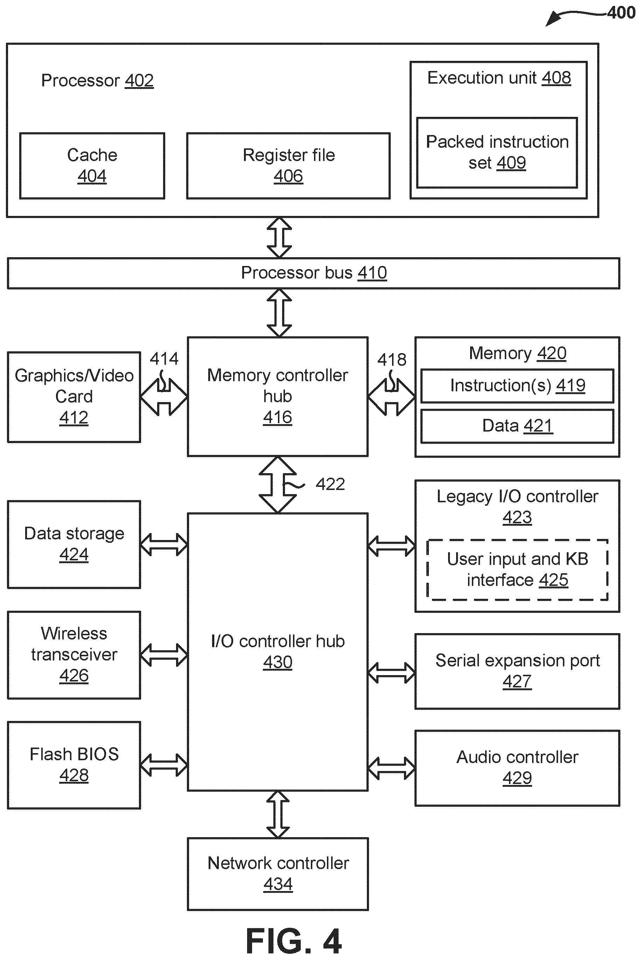

FIG. 4 illustrates computer and processor aspects 400 of a system for multicast configurations using a bitmask representation, according to at least one embodiment. The computer and processor aspects 400 may be performed by one or more processors that include a system-on-a-chip (SOC) or some combination thereof formed with a processor that may include execution units to execute an instruction, according to at least one embodiment. Such one or more processors may include CPUs, data processing units (DPUs), and graphics processing units (GPUs) and may be within a switch 106; 114, any one of different interconnect devices 120, or first or second group nodes 1-N 104A-N; 1-N 112A-N, as described all throughout herein.

In at least one embodiment, the computer and processor aspects 400 may include, without limitation, a component, such as a processor 402 to employ execution units including logic to perform algorithms for process data, in accordance with present disclosure, such as in embodiment described herein. In at least one embodiment, the computer and processor aspects 400 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, the computer and processor aspects 400 may execute a version of WINDOWS^{®} operating system available from Microsoft^{®} Corporation of Redmond, Wash., although other operating systems (UNIX^{®} and Linux^{®}, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, the computer and processor aspects 400 may include, without limitation, a processor 402 that may include, without limitation, one or more execution units 408 to perform aspects according to techniques described with respect to at least one or more of FIGS. 1-3B and 5-7 herein. In at least one embodiment, the computer and processor aspects 400 is a single processor desktop or server system, but in another embodiment, the computer and processor aspects 400 may be a multiprocessor system.

In at least one embodiment, the processor 402 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, a processor 402 may be coupled to a processor bus 410 that may transmit data signals between processor 402 and other components in computer and processor aspects 400.

In at least one embodiment, a processor 402 may include, without limitation, a Level 1 ("L1") internal cache memory ("cache") 404. In at least one embodiment, a processor 402 may have a single internal cache or multiple levels of internal cache. In at least one embodiment, cache 404 may reside external to a processor 402. Other embodiments may also include a combination of both internal and external caches depending on particular implementation and needs. In at least one embodiment, a register file 406 may store different types of data in various registers including, without limitation, integer registers, floating point registers, status registers, and an instruction pointer register.

In at least one embodiment, an execution unit 408, including, without limitation, logic to perform integer and floating point operations, also resides in a processor 402. In at least one embodiment, a processor 402 may also include a microcode ("ucode") read only memory ("ROM") that stores microcode for certain macro instructions. In at least one embodiment, an execution unit 408 may include logic to handle a packed instruction set 409.

In at least one embodiment, by including a packed instruction set 409 in an instruction set of a general-purpose processor, along with associated circuitry to execute instructions, operations used by many multimedia applications may be performed using packed data in a processor 402. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, an execution unit 408 may also be used in microcontrollers, embedded processors, graphics devices, DSPs, and other types of logic circuits. In at least one embodiment, the computer and processor aspects 400 may include, without limitation, a memory 420. In at least one embodiment, a memory 420 may be a Dynamic Random Access Memory ("DRAM") device, a Static Random Access Memory ("SRAM") device, a flash memory device, or another memory device. In at least one embodiment, a memory 420 may store instruction(s) 419 and/or data 421 represented by data signals that may be executed by a processor 402.

In at least one embodiment, a system logic chip may be coupled to a processor bus 410 and a memory 420. In at least one embodiment, a system logic chip may include, without limitation, a memory controller hub ("MCH") 416, and processor 402 may communicate with MCH 416 via processor bus 410. In at least one embodiment, an MCH 416 may provide a high bandwidth memory path 418 to a memory 420 for instruction and data storage and for storage of graphics commands, data and textures. In at least one embodiment, an MCH 416 may direct data signals between a processor 402, a memory 420, and other components in the computer and processor aspects 400 and to bridge data signals between a processor bus 410, a memory 420, and a system I/O interface 422. In at least one embodiment, a system logic chip may provide a graphics port for coupling to a graphics controller. In at least one embodiment, an MCH 416 may be coupled to a memory 420 through a high bandwidth memory path 418 and a graphics/video card 412 may be coupled to an MCH 416 through an Accelerated Graphics Port ("AGP") interconnect 414.

In at least one embodiment, the computer and processor aspects 400 may use a system I/O interface 422 as a proprietary hub interface bus to couple an MCH 416 to an I/O controller hub ("ICH") 430. In at least one embodiment, an ICH 430 may provide direct connections to some I/O devices via a local I/O bus. In at least one embodiment, a local I/O bus may include, without limitation, a high-speed I/O bus for connecting peripherals to a memory 420, a chipset, and processor 402. Examples may include, without limitation, an audio controller 429, a firmware hub ("flash BIOS") 428, a wireless transceiver 426, a data storage 424, a legacy I/O controller 423 containing user input and keyboard interfaces 425, a serial expansion port 427, such as a Universal Serial Bus ("USB") port, and a network controller 434. In at least one embodiment, data storage 424 may comprise a hard disk drive, a floppy disk drive, a CD-ROM device, a flash memory device, or other mass storage device.

In at least one embodiment, FIG. 4 illustrates computer and processor aspects 400, which includes interconnected hardware devices or "chips", whereas in other embodiments, FIG. 4 may illustrate an exemplary SoC. In at least one embodiment, devices illustrated in FIG. 4 may be interconnected with proprietary interconnects, standardized interconnects (e.g., PCIe^{®}) or some combination thereof. In at least one embodiment, one or more components of the computer and processor aspects 400 that are interconnected using compute express link (CXL) interconnects.

In at least one embodiment, the system in FIGS. 1- 4 therefore include one or more execution units 408 in the within a switch 106; 114, any one of different interconnect devices 120, or first or second group nodes 1-N 104A-N; 1-N 112A-N to support multicast configurations using a bitmask representation. For instance, one or more of the system in FIGS. 1-4 herein may include one or more circuits that may be the one or more processors 220 that are detailed herein with respect to the computer and processor aspects 400 in FIG. 4. The one ore more circuits can receive communication for a multicast group and can transmit at least data 212 from the communication 204 to different destination nodes that are part of a multicast group.

The communication 204 may include, in addition to the data 212, a multicast identifier in the MLID 208 associated with first egress ports 226 of a local switch 114, under the multicast group 240; 242. The communication 204 may include, in addition to the data 212, a bitmask representation 210 associated with second egress ports 228 of the local switch 114. The transmission of the data 212 may be through the first egress ports 226 and the second egress ports 228 to reach the destination nodes N 112N, 1-N 104A-104N.

The system herein may be such that different multicast groups 240, 242 may be associated with different sets of bitmask representations for different sets of egress ports. The different sets of bitmask representations may be associated with different destination nodes that are part of the different multicast groups 240; 242. This is at least because the bitmask representations may be different while the MLIDs may be unchanged to provide multicasting to different destination nodes. The system herein is also such that the local switch 114 that is responsible for the transmission of the data 212 for the multicast group 240; 242 in a network 100 communicates with at least one remote switch 106 associated with one of the destination nodes. In at least one example, the local switch 114 is logically closer to a source node 1 112A of the communication 204, relative to the destination nodes 1-N 104A-104N.

The system herein may be such that the local switch 114 retains a table 352 for the different multicast groups 240; 242. The local switch 114 can additionally use a mapping that is based, at least in part, on different multicast identifiers associated with the different multicast groups, in addition to different sets of bitmask representations from different source host nodes to forward communications through different egress ports therein, which include the first egress ports and the second egress ports for respective MLIDs and bitmask representations. The bitmask representation in such systems, for the second egress ports, may include a number of bits which is equal in length to an amount of the second egress ports.

In at least one embodiment, one or more of the system in FIGS. 1-4 herein may include one or more circuits that may be the one or more processors 220 of the computer and processor aspects 400 that are particularly within one or more switches 106, 114 to provide a multicast group 240; 242 for a source host node 1 112A and for destination nodes N 112N; 1-N 104A-104N. The provision of the multicast group 240; 242 may be based at least in part on multicast identifiers that may be MLIDs and different bitmask representations. The multicast identifiers may be for first egress ports may be associated with different multicast groups 240, 242 which can include the multicast group provided. The bitmask representations may be associated with second egress ports that may be also associated with different ones of the different multicast groups 240, 242 than the first egress ports. As such, the first egress ports and the second egress ports are for different communications associated with the different multicast groups 240, 242.

Such a system may be so that the different multicast groups 240, 242 are associated with different ones of the bitmask representations for the first egress ports and the second egress ports. The different ones of the bitmask representations may be associated with different destination nodes that are part of the different multicast groups 240, 242, as also described and illustrated with respect to at least FIGS. 2 and 3B. Such a system may be also so that the one or more circuits are associated with a local switch 114 and is a processor 220 of that local switch 114 that is responsible for transmission of data 212 in a network 100 for a multicast group 240; 242. Then, the local switch 114 can communicate with at least one remote switch 106 associated with one of the destination nodes, while being logically closer to the source node, of one of the different communications, relative to the destination nodes.

Such a system is also so that the one or more circuits being part of at least one switch enables the switch to retain and apply a table for the different multicast groups, which may use a mapping that is based at least in part on different multicast identifiers associated with the different multicast groups, in addition to different sets of bitmask representations from different source nodes to forward the different communications through different ones of the first egress ports and the second egress ports in the at least one switch. The system herein is such that the individual ones of the bitmask representations for the second egress ports include a number of bits which is equal in length to an amount of the second egress ports.

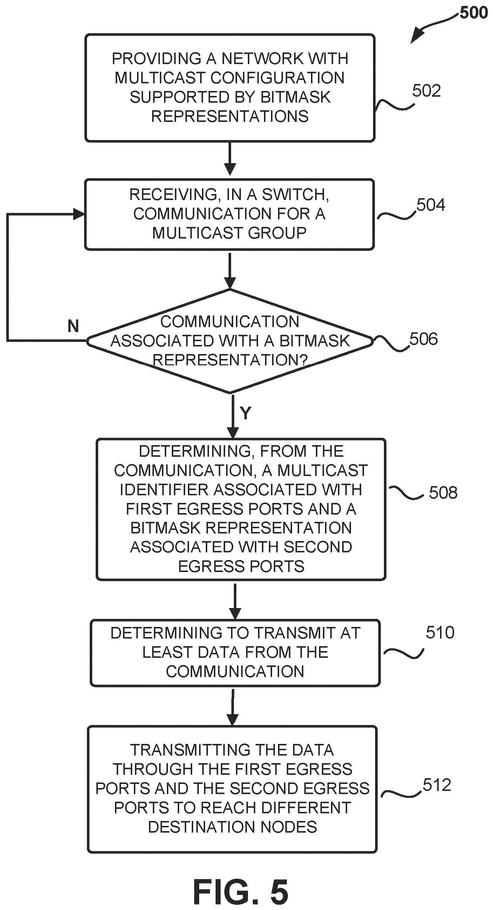

FIG. 5 illustrates a process flow or method 500 in a system for multicast configurations using a bitmask representation, according to at least one embodiment. The method 500 may include providing 502 a network with multicast configuration supported by bitmask representations. For instance, the providing 502 step may include configurations to one or more switches in a network to support multicast configuration by bitmask representations described herein. The configurations may be provided by a firmware update, for instance. The method 500 may include receiving 504, in a switch, communication for a multicast group. The method 500 may include determining or verifying 506 that the communication is associated with a bitmask representation. For instance, based at least in part on a configuration imparted to the switch, the switch is able to access a field of the communication to determine that a bitmask representation is provided therein. The method 500 may include determining 508, from the communication, a multicast identifier (such as, an MLID) associated with first egress ports and a bitmask representation associated with second egress ports. The method 500 may include determining 510 to transmit at least data from the communication. The method 500 may include transmitting 512 the data through the first egress ports and the second egress ports to reach different destination nodes associated with the different egress ports.

Further, the method 500 may be such that different multicast groups that include the multicast group for which the communication in step 504 is intended, may be associated with different sets of bitmask representations. The different sets of bitmask representations may be for different sets of egress ports of the switch which may include the first egress ports and the second egress ports. The method 500 may be also so that the different sets of bitmask representations are associated with different destination nodes that are part of the different multicast groups. This may be so that a same bitmask representation that may be used with different multicast identifiers or so that a different bitmask representation may be used with the same multicast identifiers. As such, it is possible to address different destination nodes by only changing the bitmask representations without changing the multicast identifier.

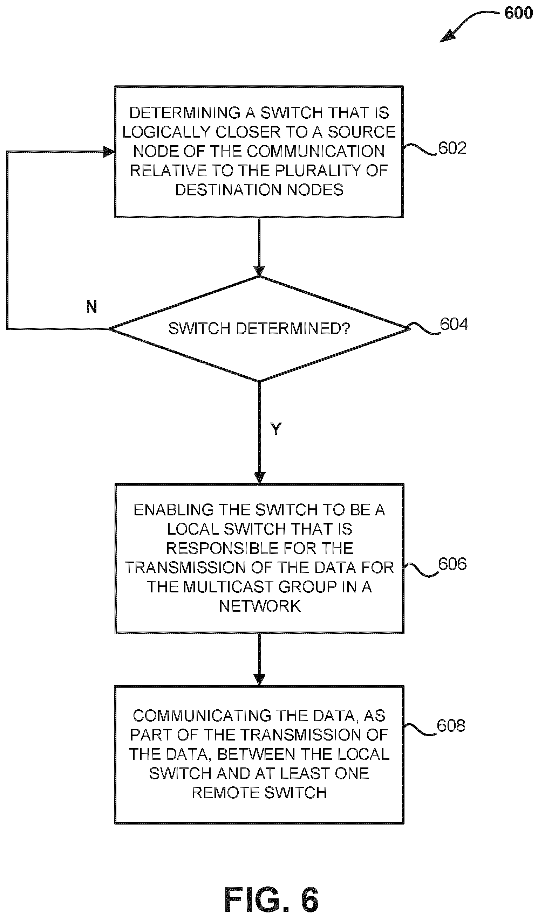

FIG. 6 illustrates yet another process flow or method 600 in a system for multicast configurations using a bitmask representation, according to at least one embodiment. The method 600 may be in support of the method 500 in FIG. 5. For example, the method 600 may include determining 602 a switch that is logically closer to a source node of the communication relative to the plurality of destination nodes. In one example, this may be performed by a hop count from a host node. The method 600 may include verifying 604 that such a switch is determined. The method 600 may include enabling 606 the switch to be a local switch that is responsible for the transmission of the data for the multicast group in a network. The method 600 may include communicating 608 the data, as part of the transmission of the data in the transmitting 512 step of FIG. 5, between the local switch and at least one remote switch. Therefore, steps in the method 600 of FIG. 6 may be performed either prior to or together with at least some steps in the method 500 of FIG. 5. For example, the determining 602 of a switch to enable the local switch may be performed prior to providing 502 step in FIG. 5 and may allow the configurations to one or more switches in a network to support multicast configuration by bitmask representations described herein, for instance. In at least one embodiment, aspects of the method 500; 600 in FIGS. 5 and 6 may be performed by an administrator of all or portions of the network 100 in FIG. 1.

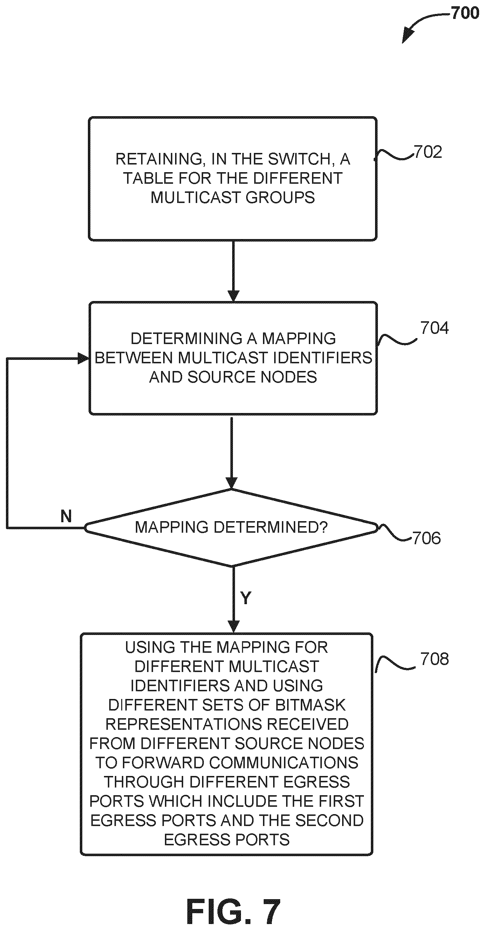

FIG. 7 illustrates a further process flow or method 700 in a system for multicast configurations using a bitmask representation, according to at least one embodiment. The method 700 may be in support of one or more of the method 500 in FIG. 5 or the method 600 in FIG. 6. For example, the method 700 may include retaining 702, in the switch, a table for the different multicast groups. The method 700 may include determining 704 a mapping between multicast identifiers and source nodes. This step may be performed by filtering, for instance, through a routing table using a source IP address, a destination IP address, or a multicast identifier. The method 700 may include verifying 706 that a mapping is determined. This may be performed by matching at least one source node to a multicast identifier already registered in the table, for instance. The method 700 may otherwise use one or more of the steps 500; 600 in FIGS. 5 and 6 to enable a network or to register a switch or a node for multicast configurations using a bitmask representation. The method 700 may include using 708 the mapping for different multicast identifiers and using different sets of bitmask representations received from different source nodes, to forward communications through different egress ports in the switch which include the first egress ports and the second egress ports.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors.

In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

Accordingly, in at least one embodiment, computer systems are configured to implement one or more services that singly or collectively perform operations of processes described herein and such computer systems are configured with applicable hardware and/or software that allow performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. References may also be made to providing, outputting, transmitting, sending, or presenting analog or digital data. In at least one embodiment, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system for multicast configuration in a network, comprising:
   a switch to receive communication for a multicast group and to transmit at least data from the communication to a plurality of destination nodes, the communication comprising, in addition to the data, a multicast identifier associated with first egress ports of the switch and a bitmask representation associated with second egress ports of the switch, wherein the transmission of the data occurs through the first egress ports and the second egress ports to reach the plurality of destination nodes.
Clause 2. The system of clause 1, wherein different multicast groups comprise the multicast group and are associated with different sets of bitmask representations for different sets of egress ports which comprise the first egress ports and the second egress ports, and wherein the different sets of bitmask representations are associated with different pluralities of destination nodes that are part of the different multicast groups.
Clause 3. The system of clause 1, wherein the switch is a local switch that is responsible for the transmission of the data in a network for the multicast group, and wherein the local switch communicates with at least one remote switch associated with one of the plurality of destination nodes, and wherein the local switch is logically closer to a source node of the communication relative to the plurality of destination nodes.
Clause 4. The system of clause 1, wherein the switch retains a table for the different multicast groups and uses a mapping that is based, at least in part, on different multicast identifiers associated with the different multicast groups, in addition to different sets of bitmask representations from different source nodes, to forward communications through different egress ports of the switch which include the first egress ports and the second egress ports.
Clause 5. The system of clause 1, wherein the bitmask representation for the second egress ports comprises a number of bits which is equal in length to an amount of the second egress ports.
Clause 6. A system comprising:
   one or more circuits to receive communication for a multicast group and to transmit at least data from the communication to a plurality of destination nodes, the communication comprising, in addition to the data, a multicast identifier associated with first egress ports of a switch under the multicast group and a bitmask representation associated with second egress ports of the switch, wherein the transmission of the data is through the first egress ports and the second egress ports to reach the plurality of destination nodes.
Clause 7. The system of clause 6, wherein different multicast groups comprise the multicast group and are associated with different sets of bitmask representations for different sets of egress ports, and wherein the different sets of bitmask representations are associated with different pluralities of destination nodes that are part of the different multicast groups.
Clause 8. The system of clause 6, wherein the switch is a local switch that is responsible for the transmission of the data for the multicast group in a network, and wherein the local switch communicates with at least one remote switch associated with one of the plurality of destination nodes, and wherein the local switch is logically closer to a source node of the communication relative to the plurality of destination nodes.
Clause 9. The system of clause 6, wherein the switch retains a table for the different multicast groups and uses a mapping that is based, at least in part, on different multicast identifiers associated with the different multicast groups, in addition to different sets of bitmask representations from different source nodes, to forward communications through different egress ports of the switch which include the first egress ports and the second egress ports.
Clause 10. The system of clause 6, wherein the bitmask representation for the second egress ports comprises a number of bits which is equal in length to an amount of the second egress ports.
Clause 11. A system comprising:
   one or more circuits to provide a multicast group for a source node and a plurality of destination nodes, the provision of the multicast group based, at least in part, on a plurality of multicast identifiers and a plurality of bitmask representations, the plurality of multicast identifiers for first egress ports associated with different multicast groups which comprise the multicast group and the plurality of bitmask representations associated with second egress ports, wherein the first egress ports and the second egress ports are for different communications associated with the different multicast groups.
Clause 12. The system of clause 11, wherein the different multicast groups are associated with different ones of the plurality of bitmask representations for the first egress ports and the second egress ports, and wherein the different ones of the plurality of bitmask representations are associated with different pluralities of destination nodes that are part of the different multicast groups.
Clause 13. The system of clause 11, wherein the one or more circuits are associated with a local switch that is responsible for transmission of data in a network for the multicast group, and wherein the local switch communicates with at least one remote switch associated with one of the plurality of destination nodes, and wherein the local switch is logically closer to the source node, of one of the different communications, relative to the plurality of destination nodes.
Clause 14. The system of clause 11, wherein the one or more circuits are part of at least one switch which retains a table for the different multicast groups and which uses a mapping that is based, at least in part, on different multicast identifiers associated with the different multicast groups, in addition to different sets of bitmask representations from different source nodes, to forward the different communications through different egress ports which include the first egress ports and the second egress ports in the at least one switch.
Clause 15. The system of clause 11, wherein individual ones of the plurality of bitmask representations for the second egress ports comprise a number of bits which is equal in length to an amount of the second egress ports.
Clause 16. A method for multicast configuration in a network, comprising:
   receiving, in a switch, communication for a multicast group;
   determining, from the communication, a multicast identifier associated with first egress ports of the switch and a bitmask representation associated with second egress ports of the switch;
   determining to transmit at least data from the communication to a plurality of destination nodes; and
   transmitting the data through the plurality of first egress ports and the second egress ports to reach a plurality of destination nodes.
Clause 17. The method of clause 16, wherein different multicast groups comprise the multicast group and are associated with different sets of bitmask representations for different sets of egress ports which comprise the first egress ports and the second egress ports, and wherein the different sets of bitmask representations are associated with different pluralities of destination nodes that are part of the different multicast groups.
Clause 18. The method of clause 16, further comprising:
   enabling the switch to be a local switch that is responsible for the transmission of the data for the multicast group in a network, the local switch enabled based, at least in part, on being logically closer to a source node of the communication relative to the plurality of destination nodes; and
   communicating the data, as part of the transmission of the data, between the local switch and at least one remote switch associated with one of the plurality of destination nodes.
Clause 19. The method of clause 16, further comprising:
   retaining, in the switch, a table for the different multicast groups; and
   using, by the switch, a mapping that is based, at least in part, on different multicast identifiers associated with the different multicast groups, in addition to different sets of bitmask representations from different source nodes, to forward communications through different egress ports of the switch which include the first egress ports and the second egress ports.
Clause 20. The method of clause 16, wherein the bitmask representation for the second egress ports comprises a number of bits which is equal in length to an amount of the second egress ports.

## Claims

1. A network device to receive communication for a multicast group and to transmit at least data from the communication to a plurality of destination nodes, the communication comprising, in addition to the data, a multicast identifier associated with first egress ports of the network device and a bitmask representation associated with second egress ports of the network device, wherein the transmission of the data occurs through the first egress ports and the second egress ports to reach the plurality of destination nodes.

2. The network device of claim 1, wherein different multicast groups comprise the multicast group and are associated with different sets of bitmask representations for different sets of egress ports which comprise the first egress ports and the second egress ports, and wherein the different sets of bitmask representations are associated with different pluralities of destination nodes that are part of the different multicast groups.

3. The network device of claim 1 or 2, wherein the network device is a local network device that is responsible for the transmission of the data in a network for the multicast group, and wherein the local network device communicates with at least one remote network device associated with one of the plurality of destination nodes, and wherein the local network device is logically closer to a source node of the communication relative to the plurality of destination nodes.

4. The network device of claim 1, 2, or 3, wherein the network device retains a table for the different multicast groups and uses a mapping that is based, at least in part, on different multicast identifiers associated with the different multicast groups, in addition to different sets of bitmask representations from different source nodes, to forward communications through different egress ports of the network device which include the first egress ports and the second egress ports.

5. The network device of any preceding claim, wherein the network device comprises a number of egress ports, wherein the bitmask representation comprises a number of bits which is equal to the number of egress ports comprised in the network device.

6. The network device of any preceding claim, wherein the network device is a switch.

7. The network device of any preceding claim, wherein the communication is a protocol data unit, preferably a packet or datagram.

8. A network device to transmit communication for a multicast group to a second network device, the communication comprising, in addition to data, a multicast identifier associated with first egress ports of the second network device and a bitmask representation associated with second egress ports of the second network device.

9. The network device of claim 8, wherein different multicast groups comprise the multicast group and are associated with different sets of bitmask representations for different sets of egress ports, and wherein the different sets of bitmask representations are associated with different pluralities of destination nodes that are part of the different multicast groups.

10. The network device of claim 8 or 9, wherein the network device is a source node of the communication.

11. The network device of claim 8, 9, or 10, wherein the second network device comprises a number of egress ports, wherein the bitmask representation comprises a number of bits which is equal to the number of egress ports comprised in the second network device.

12. A system comprising:
one or more circuits to provide a multicast group for a source node and a plurality of destination nodes, the provision of the multicast group based, at least in part, on a plurality of multicast identifiers and a plurality of bitmask representations, the plurality of multicast identifiers for first egress ports associated with different multicast groups which comprise the multicast group and the plurality of bitmask representations associated with second egress ports, wherein the first egress ports and the second egress ports are for different communications associated with the different multicast groups.

13. A method, comprising:
receiving, in a network device, communication for a multicast group;
determining, from the communication, a multicast identifier associated with first egress ports of the network device and a bitmask representation associated with second egress ports of the network device; and
transmitting the data through the first egress ports and the second egress ports to reach a plurality of destination nodes.

14. A method comprising:
transmitting, by a first network device, communication for a multicast group to a second network device, the communication comprising, in addition to data, a multicast identifier associated with first egress ports of the second network device and a bitmask representation associated with second egress ports of the second network device.

15. The method according to claim 14, further comprising:
receiving, in the second network device, the communication;
determining, by the second network device from the communication, the multicast identifier associated with the first egress ports of the second network device and the bitmask representation associated with the second egress ports of the second network device; and
transmitting, by the second network device, the data through the first egress ports and the second egress ports to reach a plurality of destination nodes.
